(19) Europäisches Patentamt
European Patent Office
Office européen des brevets

(11) **EP 4 125 304 A1**

(12) **EUROPÄISCHE PATENTANMELDUNG**

(43) Veröffentlichungstag:
**01.02.2023  Patentblatt 2023/05**

(21) Anmeldenummer: **22186243.6**

(22) Anmeldetag: **21.07.2022**

(51) Internationale Patentklassifikation (IPC):
***H05B 6/06*** *(2006.01)*

(52) Gemeinsame Patentklassifikation (CPC):
**H05B 6/065**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **26.07.2021  DE 102021208013**

(71) Anmelder: **E.G.O. Elektro-Gerätebau GmbH
75038 Oberderdingen (DE)**

(72) Erfinder:
• **Egenter, Christian
75015 Bretten (DE)**
• **Müller, Max-Felix
75038 Oberderdingen (DE)**

(74) Vertreter: **Patentanwälte
Ruff, Wilhelm, Beier, Dauster & Partner mbB
Kronenstraße 30
70174 Stuttgart (DE)**

(54) **VERFAHREN ZUM BETREIBEN EINES KÜCHENGERÄTS UND KÜCHENGERÄT**

(57)      Verfahren zum Betreiben eines Küchengeräts (100), wobei das Küchengerät (100) aufweist:
- einen Gleichrichter (1) zum Erzeugen einer Gleichspannung (UG) aus einer Netzspannung (UN),
- einen ersten aus der Gleichspannung (UG) gespeisten Wechselrichter (2), der dazu ausgebildet ist, ein erstes Ansteuersignal (AS1) mit einer ersten Frequenz (f1) zu erzeugen,
- eine mittels des ersten Ansteuersignals (AS1) angesteuerte erste Spule (3), mittels der zum Beheizen eines Kochgefäßes (4) und/oder zum Übertragen von Energie in Richtung eines elektrischen Verbrauchers (5) mittels induktiver Kopplung ein magnetisches Wechselfeld erzeugbar ist,
- einen zweiten aus der Gleichspannung (UG) gespeisten Wechselrichter (6), der dazu ausgebildet ist, ein zweites Ansteuersignal (AS2) mit einer zweiten Frequenz (f2) zu erzeugen, und
- eine mittels des zweiten Ansteuersignals (AS2) angesteuerte zweite Spule (7), mittels der zum Beheizen eines Kochgefäßes (8) und/oder zum Übertragen von Energie in Richtung eines elektrischen Verbrauchers (9) mittels induktiver Kopplung ein magnetisches Wechselfeld erzeugbar ist,
wobei das Verfahren die Schritte aufweist:
- Ansteuern des ersten Wechselrichters (2) und des zweiten Wechselrichters (6) derart, dass die erste Frequenz (f1) und die zweite Frequenz (f2) voneinander abhängen.

Fig. 1

**Beschreibung**

Die Erfindung betrifft ein Verfahren zum Betreiben eines Küchengeräts und ein Küchengerät.

Der Erfindung liegt die Aufgabe zugrunde, ein Verfahren zum Betreiben eines Küchengeräts und ein Küchengerät zur Verfügung zu stellen, die einen möglichst geräuscharmen Betrieb ermöglichen.

Das Verfahren dient zum Betreiben eines Küchengeräts.

Das Küchengerät weist einen herkömmlichen ein- oder mehrphasigen Gleichrichter zum Erzeugen einer Gleichspannung aus einer ein- oder mehrphasigen Netzspannung bzw. Netzwechselspannung auf.

Das Küchengerät weist weiter einen herkömmlichen ersten aus der Gleichspannung gespeisten Wechselrichter auf, der dazu ausgebildet ist, ein erstes Ansteuersignal mit einer ersten Frequenz zu erzeugen. Das erste Ansteuersignal ist bevorzugt ein pulsweitenmoduliertes (Rechteck-) Signal mit einstellbarer Frequenz und einstellbarem Tastverhältnis.

Das Küchengerät weist weiter eine herkömmliche mittels des ersten Ansteuersignals angesteuerte erste Spule auf, mittels der zum Beheizen eines Kochgefäßes und/oder zum Übertragen von Energie in Richtung eines elektrischen Verbrauchers mittels induktiver Kopplung ein magnetisches Wechselfeld erzeugbar ist. Insoweit sei auch auf die einschlägige Fachliteratur verwiesen.

Das Küchengerät weist weiter einen herkömmlichen zweiten aus der Gleichspannung gespeisten Wechselrichter auf, der dazu ausgebildet ist, ein zweites Ansteuersignal mit einer zweiten, von der ersten Frequenz verschiedenen Frequenz zu erzeugen. Das zweite Ansteuersignal ist bevorzugt ein pulsweitenmoduliertes (Rechteck-) Signal mit einstellbarer Frequenz und einstellbarem Tastverhältnis.

Das Küchengerät weist weiter eine mittels des zweiten Ansteuersignals angesteuerte zweite Spule auf, mittels der zum Beheizen eines Kochgefäßes und/oder zum Übertragen von Energie in Richtung eines elektrischen Verbrauchers mittels induktiver Kopplung ein magnetisches Wechselfeld erzeugbar ist.

Das Küchengerät weist weiter eine Steuereinheit, beispielsweise in Form einer Mikroprozessorsteuerung, zur Steuerung des ersten Wechselrichters und des zweiten Wechselrichters auf, wobei die Steuereinheit den ersten Wechselrichter und den zweiten Wechselrichter derart ansteuert, dass ein nachfolgend beschriebenes Verfahren ausgeführt wird.

Erfindungsgemäß wird der erste Wechselrichter und der zweite Wechselrichter derart angesteuert, dass die erste Frequenz und die zweite Frequenz voneinander abhängen.

In einer Ausführungsform werden der erste Wechselrichter und der zweite Wechselrichter derart angesteuert, dass die zweite Frequenz eine ganzzahlige Vielfache der ersten Frequenz ist.

In einer Ausführungsform werden der erste Wechselrichter und der zweite Wechselrichter derart angesteuert, dass die zweite Frequenz das Zweifache der ersten Frequenz beträgt.

In einer Ausführungsform wird eine der Frequenzen in Abhängigkeit von einer zugehörigen Heizleistung oder einer zugehörigen zu übertragenden Leistung eingestellt und die andere der beiden Frequenzen in Abhängigkeit von der eingestellten Frequenz nachgeführt.

In einer Ausführungsform wird ein Tastgrad des Ansteuersignals mit der nachgeführten Frequenz in Abhängigkeit von einer zugehörigen Heizleistung oder einer zugehörigen zu übertragenden Leistung eingestellt.

In einer Ausführungsform liegt die erste Frequenz oder die zweite Frequenz in einem Frequenzbereich zwischen 18 kHz und 37 kHz.

In einer Ausführungsform weist das Küchengerät einen Zwischenkreiskondensator auf, der dazu ausgebildet ist, die Gleichspannung zu puffern.

Der jeweilige Wechselrichter in Verbindung mit der zugehörigen Spule bildet bevorzugt eine sogenannte herkömmliche Induktionsheizeinrichtung zum Beheizen des Kochgefäßes oder einen sogenannten Ki (Kordless Kitchen) Transmitter zum Übertragen von Energie in Richtung des elektrischen Verbrauchers bzw. KI Receivers mittels induktiver Kopplung, d.h. einen KI-Transmitter für den sogenannten WPT-Betrieb.

Wenn mehrere Wechselrichter bzw. Umrichter am selben Gleichrichter bzw. Zwischenkreis bei unterschiedlichen Frequenzen f1 und f2 betrieben werden, kommt es am Zwischenkreiskondensator zu einer Mischung der Frequenzen und es ergeben sich die Frequenzen f1 + f2 und f1 - f2. Das führt zu einer Schwebung im hörbaren Bereich. Um diese Schwebungen zu vermeiden, werden herkömmlich die Frequenzen aller Wechselrichter am selben Zwischenkreis gleich gewählt und mit einer Regelung des Tastverhältnisses die entsprechenden Leistungen der Wechselrichter eingestellt.

Erfindungsgemäß werden stattdessen Interferenzen zwischen verschiedenen Wechselrichtern dadurch vermieden, dass der zweite Wechselrichter genau mit der doppelten Frequenz betrieben wird, weil dann auch Interferenzen mit beliebigen Harmonischen untereinander im nicht hörbaren Bereich bleiben. Die Frequenzen des zweiten Umrichters und deren Harmonische liegen nämlich alle auf Harmonischen der ersten Frequenz und damit mindestens im Abstand der ersten Frequenz, es kann also nie zu Schwebungen im Frequenzbereich unter der ersten Frequenz kommen. Die niedrigere Frequenz muss hierbei selbstverständlich außerhalb des hörbaren Bereichs liegen.

Erfindungsgemäß können Interferenzen insbesondere beim parallelen Betrieb von Induktionsheizeinrichtung und Ki-Transmitter vermieden werden, da der Ki-Transmitter vorzugweise mit einer solch hohen Frequenz betrieben wird, auf der die Induktionsheizeinrichtung auf zu kleine Leistungen beschränkt wäre. Die erste, d.h. niedrigere, Frequenz wird folglich typisch für die Induktionsheizeinrichtung verwendet und die zweite, d.h. die doppelte erste Frequenz, wird für den Ki-Transmitter verwendet.

Häufig ist die Frequenz für den Ki-Transmitter, d.h. typisch die zweite Frequenz, von der Auslegung des Ki-Transmitters und des Ki-Receivers abhängig, d.h. nicht frei wählbar. Dann kann die Frequenz für den Ki-Transmitter vorgegeben werden und die Frequenz für die Induktionsheizeinrichtung, d.h. die erste Frequenz, derart nachgeführt werden, dass sie der Hälfte der Frequenz des Ki-Transmitters entspricht. Zur Leistungseinstellung der Induktionsheizeinrichtung kann dann bei konstanter erster Frequenz das Tastverhältnis in Abhängigkeit von der gewünschten Leistung gewählt werden.

Wenn jedoch die Frequenz für den Betrieb der Induktionsheizeinrichtung nicht verändert werden kann und/oder die benötigte Frequenz der Induktionsheizeinrichtung unpassend für den Ki-Transmitter wäre, kann stattdessen die Frequenz der Induktionsheizeinrichtung vorgegeben werden und die Frequenz des Ki-Transmitters derart nachgeführt werden, dass sie dem Doppelten der Frequenz der Induktionsheizeinrichtung entspricht.

Erfindungsgemäß ist folglich ein paralleler Betrieb eines Ki-Transmitters und einer Induktionsheizeinrichtung am selben Zwischenkreis möglich, wobei durch geeignete Wahl der Frequenz des Ki-Transmitters und der Frequenz der Induktionsheizeinrichtung keine Interferenzen bzw. Schwebungen hörbar sind, auch wenn sich die Frequenzen unterscheiden.

Die Erfindung wird nachfolgend unter Bezugnahme auf die Zeichnung detailliert beschrieben. Hierbei zeigt:

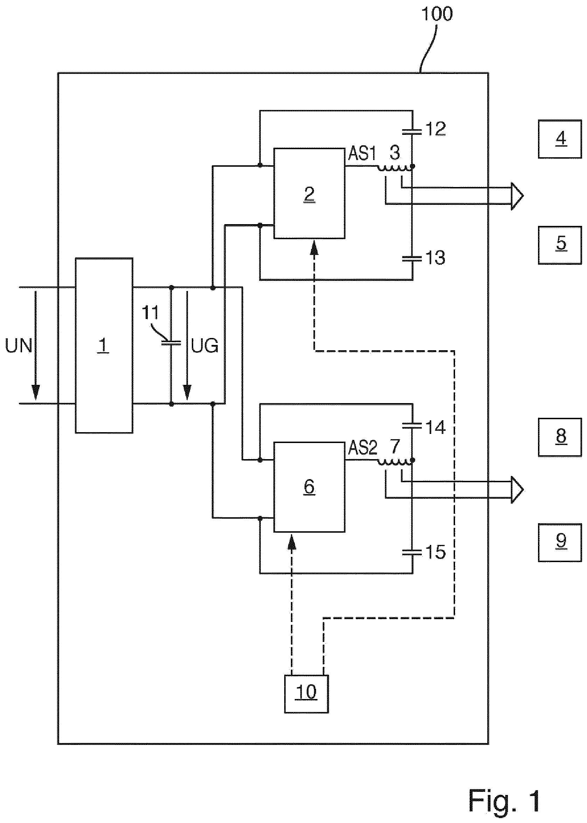

Fig. 1     ein erfindungsgemäßes Küchengerät zum geräuscharmen parallelen Betrieb von Induktionsheizeinrichtungen und Ki-Transmittern.

Fig. 1 zeigt ein Küchengerät 100 zum geräuscharmen parallelen Betrieb von zwei Induktionsheizeinrichtungen, oder zwei Ki-Transmittern oder einem Ki-Transmitter und einer Induktionsheizeinrichtung.

Das Küchengerät 100 weist einen herkömmlichen Gleichrichter 1 zum Erzeugen einer Gleichspannung UG aus einer Netzspannung UN auf. Die Gleichspannung UG bildet eine Zwischenkreisspannung in Verbindung mit mindestens einem Zwischenkreiskondensator 11 zum Kurzschließen der hochfrequenten Ströme der Wechselrichter 2, 6.

Das Küchengerät 100 weist weiter einen ersten aus der Gleichspannung UG gespeisten Wechselrichter 2 auf, der dazu ausgebildet ist, ein erstes rechteckförmiges pulsweitenmoduliertes Ansteuersignal AS1 mit einer ersten Frequenz f1 zu erzeugen. Das Küchengerät 100 weist weiter eine mittels des ersten Ansteuersignals AS1 angesteuerte erste Spule 3 auf, mittels der zum Beheizen eines Kochgefäßes 4 und/oder zum Übertragen von Energie in Richtung eines elektrischen Verbrauchers 5 mittels induktiver Kopplung ein magnetisches Wechselfeld erzeugbar ist. Die erste Spule 3 ist in einer herkömmlichen Beschaltung mit einem ihrer Anschlüsse mit einem Verbindungsknoten zwischen zwei Kondensatoren 12 und 13 elektrisch verbunden, wobei die beiden Kondensatoren 12 und 13 in Reihe geschaltet mit der Gleichspannung UG beaufschlagt sind. Der erste Wechselrichter 2, die erste Spule 3 und die Kondensatoren 12 und 13 sind folglich Bestandteil einer ersten Induktionsheizeinrichtung oder eines ersten Ki-Transmitters.

Das Küchengerät 100 weist weiter einen zweiten aus der Gleichspannung UG gespeisten Wechselrichter 6 auf, der dazu ausgebildet ist, ein zweites rechteckförmiges pulsweitenmoduliertes Ansteuersignal AS2 mit einer zweiten Frequenz f2 zu erzeugen. Das Küchengerät 100 weist weiter eine mittels des zweiten Ansteuersignals AS2 angesteuerte zweite Spule 7 auf, mittels der zum Beheizen eines Kochgefäßes 8 und/oder zum Übertragen von Energie in Richtung eines elektrischen Verbrauchers 9 mittels induktiver Kopplung ein magnetisches Wechselfeld erzeugbar ist. Die zweite Spule 7 ist in einer herkömmlichen Beschaltung mit einem ihrer Anschlüsse mit einem Verbindungsknoten zwischen zwei Kondensatoren 14 und 15 elektrisch verbunden, wobei die beiden Kondensatoren 14 und 15 in Reihe geschaltet mit der Gleichspannung UG beaufschlagt sind. Der zweite Wechselrichter 6, die zweite Spule 7 und die Kondensatoren 14 und 15 sind folglich Bestandteil einer zweiten Induktionsheizeinrichtung oder eines zweiten Ki-Transmitters.

Das Küchengerät 100 weist weiter eine Steuereinheit 10 zur Steuerung des ersten Wechselrichters 2 und des zweiten Wechselrichters 6 auf.

Die Steuereinheit 10 steuert den ersten Wechselrichter 2 und den zweiten Wechselrichter 6 derart an, dass die zweite Frequenz f2 das Zweifache der ersten Frequenz f1 beträgt, d.h. es gilt:

$$f2 = 2 \times f1$$

Typisch wird die Frequenz f2 in Abhängigkeit von einer zu übertragenden Leistung eingestellt bzw. vorgegeben und die Frequenz f1 wird zu f1 = f2 / 2 nachgeführt.

Ein Tastgrad des Ansteuersignals AS1 wird in Abhängigkeit von einer zugehörigen Heizleistung eingestellt. Der Tastgrad des Ansteuersignals AS2 wird typisch auf konstant 50 % eingestellt.

Die erste Frequenz f1 liegt typisch in einem Frequenzbereich zwischen 18 kHz und 37 kHz.

**Patentansprüche**

1.  Verfahren zum Betreiben eines Küchengeräts (100), wobei das Küchengerät (100) aufweist:

- einen Gleichrichter (1) zum Erzeugen einer Gleichspannung (UG) aus einer Netzspannung (UN),

- einen ersten aus der Gleichspannung (UG) gespeisten Wechselrichter (2), der dazu ausgebildet ist, ein erstes Ansteuersignal (AS1) mit einer ersten Frequenz (f1) zu erzeugen,

- eine mittels des ersten Ansteuersignals (AS1) angesteuerte erste Spule (3), mittels der zum Beheizen eines Kochgefäßes (4) und/oder zum Übertragen von Energie in Richtung eines elektrischen Verbrauchers (5) mittels induktiver Kopplung ein magnetisches Wechselfeld erzeugbar ist,

- einen zweiten aus der Gleichspannung (UG) gespeisten Wechselrichter (6), der dazu ausgebildet ist, ein zweites Ansteuersignal (AS2) mit einer zweiten Frequenz (f2) zu erzeugen, und

- eine mittels des zweiten Ansteuersignals (AS2) angesteuerte zweite Spule (7), mittels der zum Beheizen eines Kochgefäßes (8) und/oder zum Übertragen von Energie in Richtung eines elektrischen Verbrauchers (9) mittels induktiver Kopplung ein magnetisches Wechselfeld erzeugbar ist,

dadurch gekennzeichnet, dass das Verfahren die Schritte aufweist:

- Ansteuern des ersten Wechselrichters (2) und des zweiten Wechselrichters (6) derart, dass die erste Frequenz (f1) und die zweite Frequenz (f2) voneinander abhängen.

2. Verfahren nach Anspruch 1, **dadurch gekennzeichnet, dass**

- der erste Wechselrichter (2) und der zweite Wechselrichter (6) derart angesteuert werden, dass die zweite Frequenz (f2) eine ganzzahlige Vielfache der ersten Frequenz (f1) ist.

3. Verfahren nach einem der vorhergehenden Ansprüche, **dadurch gekennzeichnet, dass**

- der erste Wechselrichter (2) und der zweite Wechselrichter (6) derart angesteuert werden, dass die zweite Frequenz (f2) das Zweifache der ersten Frequenz (f1) beträgt.

4. Verfahren nach einem der vorhergehenden Ansprüche, **gekennzeichnet durch** den Schritt

- Einstellen einer der Frequenzen in Abhängigkeit von einer zugehörigen Heizleistung oder einer zugehörigen zu übertragenden Leistung und Nachführen der anderen der beiden Frequenzen in Abhängigkeit von der eingestellten Frequenz.

5. Verfahren nach Anspruch 4, **gekennzeichnet durch** den Schritt

- Einstellen eines Tastgrads des Ansteuersignals mit der nachgeführten Frequenz in Abhängigkeit von einer zugehörigen Heizleistung oder einer zugehörigen zu übertragenden Leistung.

6. Verfahren nach einem der vorhergehenden Ansprüche, **dadurch gekennzeichnet, dass**

- die erste Frequenz (f1) oder die zweite Frequenz (f2) in einem Frequenzbereich zwischen 18 kHz und 37 kHz liegt.

7. Küchengerät (100), aufweisend:

- einen Gleichrichter (1) zum Erzeugen einer Gleichspannung (UG) aus einer Netzspannung (UN),

- einen ersten aus der Gleichspannung (UG) gespeisten Wechselrichter (2), der dazu ausgebildet ist, ein erstes Ansteuersignal (AS1) mit einer ersten Frequenz (f1) zu erzeugen,

- eine mittels des ersten Ansteuersignals (AS1) angesteuerte erste Spule (3), mittels der zum Beheizen eines Kochgefäßes (4) und/oder zum Übertragen von Energie in Richtung eines elektrischen Verbrauchers (5) mittels induktiver Kopplung ein magnetisches Wechselfeld erzeugbar ist,

- einen zweiten aus der Gleichspannung (UG) gespeisten Wechselrichter (6), der dazu ausgebildet ist, ein zweites Ansteuersignal (AS2) mit einer zweiten Frequenz (f2) zu erzeugen,

- eine mittels des zweiten Ansteuersignals (AS2) angesteuerte zweite Spule (7), mittels der zum Beheizen eines Kochgefäßes (8) und/oder zum Übertragen von Energie in Richtung eines elektrischen Verbrauchers (9) mittels induktiver Kopplung ein magnetisches Wechselfeld erzeugbar ist, und

- eine Steuereinheit (10) zur Steuerung des ersten Wechselrichters (2) und des zweiten Wechselrichters (6), wobei die Steuereinheit (10) den ersten Wechselrichter (2) und den zweiten Wechselrichter (6) derart ansteuert, dass ein Verfahren nach einem der vorhergehenden Ansprüche ausgeführt wird.

8. Küchengerät (100) nach Anspruch 7, **dadurch gekennzeichnet, dass**

- das Küchengerät (100) mindestens einen Zwischenkreiskondensator (11) aufweist.

Fig. 1

EUROPÄISCHER RECHERCHENBERICHT

Europäisches Patentamt
European Patent Office
Office européen des brevets

Nummer der Anmeldung

EP 22 18 6243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 043634 A (PANASONIC CORP) 1. März 2012 (2012-03-01) * Zusammenfassung * * Abbildungen 1,2,6 * ----- | 1-3,6-8 | INV. H05B6/06 |
| X | EP 2 506 665 A2 (BSH BOSCH SIEMENS HAUSGERAETE [DE]) 3. Oktober 2012 (2012-10-03) * Zusammenfassung * * Abbildungen 2-4 * * Absätze [0023] - [0028] * * Ansprüche 1-7 * ----- | 1,4-7 | |
| X | US 2010/237065 A1 (CHO CHENG-HSIEN [TW] ET AL) 23. September 2010 (2010-09-23) * Zusammenfassung * * Abbildungen 1,2a * * Anspruch 1 * * Absätze [0007], [0018] - [0020], [0023] - [0041] * ----- | 1,7 | |
| X | WO 2006/117182 A1 (EGO ELEKTRO GERAETEBAU GMBH [DE]; HAAG THOMAS [DE] ET AL.) 9. November 2006 (2006-11-09) * Zusammenfassung * * Seite 8, Zeile 10 - Seite 10, Zeile 25 * * Ansprüche 1-4 * ----- | 1,7 | RECHERCHIERTE SACHGEBIETE (IPC) H05B |
| A | US 2021/105871 A1 (KIM HANNA [KR] ET AL) 8. April 2021 (2021-04-08) * Zusammenfassung * * Abbildungen 1,2,4,5 * * Absätze [0011] - [0013], [0087] - [0103] * * Anspruch 1 * ----- | 1-8 | |

Der vorliegende Recherchenbericht wurde für alle Patentansprüche erstellt

| Recherchenort | Abschlußdatum der Recherche | Prüfer |
|---|---|---|
| München | 30. November 2022 | de la Tassa Laforgue |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 6243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2022

| Im Recherchenbericht angeführtes Patentdokument | Datum der Veröffentlichung | Mitglied(er) der Patentfamilie | Datum der Veröffentlichung |
|---|---|---|---|
| JP 2012043634 A | 01-03-2012 | JP 5605077 B2<br>JP 2012043634 A | 15-10-2014<br>01-03-2012 |
| EP 2506665 A2 | 03-10-2012 | KEINE | |
| US 2010237065 A1 | 23-09-2010 | TW 201034607 A<br>US 2010237065 A1 | 01-10-2010<br>23-09-2010 |
| WO 2006117182 A1 | 09-11-2006 | CN 101208994 A<br>DE 102005021888 A1<br>EP 1878309 A1<br>ES 2389935 T3<br>JP 5027115 B2<br>JP 2008541343 A<br>KR 20080020987 A<br>PL 1878309 T3<br>US 2008087661 A1<br>WO 2006117182 A1 | 25-06-2008<br>15-02-2007<br>16-01-2008<br>05-11-2012<br>19-09-2012<br>20-11-2008<br>06-03-2008<br>31-12-2012<br>17-04-2008<br>09-11-2006 |
| US 2021105871 A1 | 08-04-2021 | EP 4044767 A1<br>KR 102234442 B1<br>US 2021105871 A1<br>WO 2021071076 A1 | 17-08-2022<br>30-03-2021<br>08-04-2021<br>15-04-2021 |

EPO FORM P0461

Für nähere Einzelheiten zu diesem Anhang : siehe Amtsblatt des Europäischen Patentamts, Nr.12/82